# EUROPÄISCHE PATENTSCHRIFT

(11) **EP 3 861 060 B1**
(45) Veröffentlichungstag und Bekanntmachung des Hinweises auf die Patenterteilung: **31.12.2025**
(21) Anmeldenummer: 19790141.6
(22) Anmeldetag: 02.10.2019
(51) Int. Cl.: C08K 3/013, C08K 5/00, C08K 7/02, C08L 27/06

(54) **MODELLIERMASSE SOWIE DEREN VERWENDUNG UND DAMIT HERGESTELLTE GEGENSTÄNDE**
MODELING COMPOUND AND USE THEREOF AND ARTICLES PRODUCED THEREBY
MATIÈRE À MODELER, SON UTILISATION ET ARTICLES FABRIQUÉS AVEC CETTE MATIÈRE

(30) Priorität: 02.10.2018 DE 102018007756
(43) Veröffentlichungstag der Anmeldung: 11.08.2021
(73) Patentinhaber: STAEDTLER SE, 90427 Nürnberg (DE)
(72) Erfinder: WUNDERLICH, Laura, 90461 Nürnberg (DE); SCHNEIDER, Denise, 90427 Nürnberg (DE); BELZNER, Mathias, 90556 Cadolzburg (DE)
(86) Internationale Anmeldenummer: PCT/EP2019/025330
(87) Internationale Veröffentlichungsnummer: WO 2020/069777

(56) Entgegenhaltungen:
- DE-A1- 102005 059 143
- DE-A1- 3 131 456
- DE-U1- 202005 019 340

## Beschreibung

Die Erfindung betrifft eine ofenhärtbare Modelliermasse sowie deren Verwendung und damit hergestellte Gegenstände.

Plastische, ofenhärtbare Massen zum Formen und Modellieren von Gegenständen sind prinzipiell bekannt.

Unter Modelliermassen sind auch sogenannte Clays, bzw. bei polymerhaltigen Massen Polymerclays zu verstehen.

So ist aus DE 25 15 757 C3 eine plastische, von Hand verformbare und durch Erhitzen härtbare Masse bekannt.

Eine derartige Masse besteht im Wesentlichen aus Polyvinylchlorid, Füllstoff und Weichmacher. Der Weichmacher liegt in phthalathaltiger Ausprägung in einem Gehalt von bis zu 30 Gew. % vor.

Weiter ist aus der DE 10 2005 059 143 A1 eine Modelliermasse bekannt, die neben Bindemitteln Weichmacher in phthalatfreier Form aufweist.

Nachteilig bei den vorstehen genannten Massen ist es, dass die Oberflächen der modellierten Produkte glatt ausgebildet sind und in der Regel die Oberflächenstruktur des Bearbeitungswerkzeuges wiederspiegeln.

Aus der DE 20 2009 002 221 U1 ist eine plastische Masse bekannt, die als Plastisol ein PCL, einen biologisch abbaubaren Kunststoff aufweist. Als Füllstoff sind in der Masse Fasermaterialien und/oder Cellulosefasern enthalten. Diese plastischen Massen werden im Hobbybereich beispielsweise zur Schmuckherstellung oder als Abformmasse eingesetzt.

DE 10 2005 011 692 A1 beschreibt eine plastisch verformbare Masse, welche neben Bindemittel und Wasser auch Füllstoffe in Form von Fasern aus Cellulose und Kunststoffen aufweist. Diese Masse eignet sich als Modelliermasse zur Herstellung von Gegenständen, als Abformmasse zur Nachbildung von Gegenständen und als Spachtelmasse zum Füllen und Ausgleichen von Unebenheiten.

Nachteilig ist bei den derartige Massen gemäß DE 20 2009 002 221 U1 und DE 10 2005 011 692 A1 anzusehen, dass diese Massen beim Modellieren eine glatte Oberfläche ohne Strukturen ausbilden.

Ebenso sei zu den Modelliermassen die DE 202005019340 U1 genannt, die als eine der ersten Modelliermassen phthalatfreien Weichmacher enthält. Auch hier sind die Oberflächen der gestalteten Produkte ohne Strukturen ausgebildet.

Weiter ist aus der DE 3131456 A1 ein Radierer mit Füllstoffen bekannt, unter Anderem Kunststofffasern.

**Aufgabe** der Erfindung ist es daher, eine Modellier- oder Formmasse zu schaffen, die die eingangs genannten Nachteile nicht aufweist und die insbesondere nach dem Modelliervorgang automatisch, d.h. ohne Zuhilfenahme von Werkzeugen und/oder anderen Hilfsmitteln, eine Oberflächenstruktur, ausbildet, welche insbesondere optisch und/oder haptisch wahrnehmbar ist.

Weiter ist es Aufgabe der Erfindung, dass mit der erfindungsgemäßen Modelliermasse sowohl optische als auch haptische, lederähnliche Effekte/Strukturen nachgebildet werden können.

Diese Aufgabe(n) werden mit den in den Ansprüchen 1, 9 und 10 umfassten Merkmalen gelöst.

Vorteilhafte Ausgestaltungen und Weiterbildungen der erfindungsgemäßen Massen sind mit den weiteren Ansprüchen umfasst.

Diese Aufgabe wird durch eine Modelliermasse, mindestens bestehend aus Bindemittel, welches als Plastisol vorliegt und ggf. weiteren Zusatzstoffen, wobei sich das Plastisol sich im Wesentlichen aus PVC und Weichmacher zusammensetzt. Die Masse beinhaltet mindestens einem Füllstoff aus Kunststofffasern.

Es hat sich in überraschender Weise gezeigt, dass durch die Zugabe von verzweigten Kunststoffasern als Füllstoffe in Modelliermassengemische bereits vor dem Härtevorgang sich eine optisch und/oder haptisch wahrnehmbare strukturierte Oberflächengestaltung ausbildet.

Die besonderen Vorteile der erfindungsgemäßen Massen liegen in der sich insbesondere beim Modellieren automatisch ausbildenden Oberflächenstruktur. Beispielhaft sei die Oberflächenstruktur von Leder genannt, die mit der Masse gemäß dem Anspruch 1 einfach und ohne Zusatzaufwand, wie einem zusätzlichem Arbeitsschritt und/oder Strukturwerkzeug, realisiert werden kann. Neben dem optischen Effekt der Oberflächenstruktur wird auch ein haptischer Effekt erzielt, der bei den glatten Oberflächen der Massen nach dem Stand der Technik nicht ausgeprägt ist.

Die erfindungsgemäße Modelliermasse besteht aus Bindemittel, Weichmacher, und mindestens einem Füllstoff, der in Form von Kunststofffasern ausgebildet ist.

Das eingesetzte Bindemittel besteht im Wesentlichen aus Plastisol. Dieses Plastisol setzt sich im Wesentlichen aus PVC und Weichmacher zusammen. Dabei kann der PVC u. a. ein emulgatorhaltiger oder -freier Emulsions-PVC, Suspensions-PVC und Mikroperl-Suspensions-PVC oder eine Mischung der einzelnen PVC-Typen sein.

Der eingesetzte **Weichmacher** kann in den vorliegenden Massen als ein phthalathaltiger und/oder phthalatfreier Weichmacher vorliegen.

Eine besonders bevorzugte Ausführungsform der Erfindung ist eine Masse, welche frei von phthalathaltigen Weichmachern ist.

Phthalatfreie Weichmacher sind beispielsweise auf Citronensäurebasis, auf Adipinsäurebasis und/oder Benzoat-ester-Basis aufgebaut.

Als phthalatfreie Weichmacher seien beispielhaft Acetyltributylcitrat, Tri-(2-ethylhexyl)-actylcitrat, Trioctylcitrat, Tridecylcitrat, Tributylcitrat, Trihexylcitrat, Triethylcitrat, Dioctyladipat, Diisodecyladipat, Diisononyladipat, Bis (2-ethylhexyl) adipate, 1,2-Cyclohexandicarbonsäurediisononylester, Essigsäureester von Monoglyceriden, Benzoaten oder ein Gemisch aus mindestens zweier dieser Substanzen genannt.

Weiter kann der Weichmacher der Gruppe der Benzoate oder Benzoatester angehören. Beispielhaft seinen 2,2,4-Triethyl-1,3-Pentanediyl Dibenzoate und Derivate davon, Triethylenglycol-dibenzoate, Diethylen glycol dibenzoate, Diethylen glycol monobenzoate und/oder Propylenglycoldibenzoate genannt. Beliebige Mischungen aller vorgenannten Weichmacher sind möglich. Phthalathaltige Weichmacher können beispielhaft Dieethylhexylphthalat, 1,2-Benzoldicarbonsäure, Cyclohexandicarbonsäureester, Phthalsäurediisononylester und Phthalsäurediisodecylester sein.

Die Modelliermasse weist 24 - 38 Gew. % Weichmacheranteil auf.

Bevorzugt sind 28 - 36 Gew. % Weichmacher in der Masse enthalten.

Es hat sich in überraschender Weise gezeigt, dass durch den Einsatz von **Kunststofffasern** als Füllstoff in der Zusammensetzung der Modelliermasse eine Oberflächenstruktur ausgebildet ist bzw. wird, die der Struktur von Leder sehr nahe kommt. Diese Struktur bildet sich automatisch aus. Dabei hat es sich als besonders vorteilhaft erwiesen, wenn die Kunststofffasern verzweigt ausgebildet sind.

Als Kunststofffasern liegen beispielhaft als Polyolefinfasern und/oder Polyesterfaser vor. Polyolefinfasern können als Polypropylenfasern oder Polyethylenfasern sowie Mischungen dieser Fasern vorliegen.

Polyesterfasern können als Polyethylentherephthalat-Fasern vorliegen. Die Masse weist 2 - 10 Gew. %, bevorzugt 3 - 8 % Kunststofffasern auf. Weiter hat es sich als vorteilhaft herausgestellt, wenn die Fasern eine Länge von 0,20 - 1,05 mm, bevorzugt 0,35 bis 0,95 mm aufweisen. Je nach Länge der Fasern kann der Effekt der sich ausbildenden Strukturen mehr oder weniger stark ausgebildet sein, bzw. feiner oder eher grobe Strukturen/oberflächenstrukturen aufweisen.

Die Faserdicke, bzw. Faserstärke liegt dabei im Bereich von 0,25 bis 0,60 µm.

Neben den als Füllstoff eingesetzten Kunststofffasern finden weitere **Füllstoffe** in Form von anorganischen und/oder organischen Füllstoffen Verwendung. Beispielhaft seien Kaolin, Kreide, Talkum, Aluminiumhydroxid und/oder Tonmehl genannt, welche eine Korngröße < 250 µm, bevorzugt kleiner 100 µm aufweisen.

Als weitere Füllstoffe können Metallglitter, Glitter oder Mischungen dieser Stoffe vorliegen, um dadurch beispielsweise besondere optische Effekte zu erzielen.

Als Füllstoffe können auch sogenannte Leichtfüllstoffe eingesetzt bzw. anderen genannten Füllstoffen beigemischt werden, welche in der Form handelsüblicher Mikro-Glashohlkugeln oder Kunststoffhohlkugeln vorliegen.

Ein **Stabilisator** in derartigen Modelliermasse verbessert die PVC-Stabilität, d. h. er verhindert u. a. die Abspaltung von Chlorwasserstoff. Dazu werden vor allem anorganische und organische Salze der Metalle Calcium, Zink, Zinn, Magnesium, Natrium und Kalium eingesetzt, z. B. Calciumstearat, Natriumstearat, Kaliumstearat, Zinkstearat, Magnesiumstearat, Zinnstearat und/oder Gemische der Metallsalze.

Als **Farbmittel** können Pigmente in reiner Form, als Pulverpigmente, als Pigmentpräparationen, bevorzugt als azofreies Farbpigment, Effektpigment und/oder azofreier verlackter Farbstoff vorliegen. Als Auswahl einer Vielzahl von möglichen Farbpigmenten seien Pigment Yellow 14 (C.I. 21095), Pigment Red 254(C.I. 56110), Pigment Orange 34 (C.I. 21110) Pigment Red 122 (C.I. 73915) Pigment Green 7 (C.I. 74260), Pigment White 6 (C.I. 77891), Pigment Black 7 (C.I 77266), Pigment Red 101 (C.I. 77491), Pigment Violet 23 (C.I. 51319), Pigment Blue 29 (C.I. 77007), Pigment Yellow 185 (C.I. 56290), Pigment Yellow 1 (C.I.11680), Pigment Red 48:2 (C.I. 15865:2), Pigment Red 53:1 (C.I. 15585:1), Pigment Orange 34 (C.I. 21115), Pigment Yellow 83 (C.I. 21108) und Pigment Blue 15 (C.I. 74160) genannt.

Durch die Zugabe dieser Farbmittel erhält die Modelliermasse bzw. die damit hergestellten Gegenstände wie beispielsweise lederähnliche Gegenstände/Lederimitate ein brillantes Aussehen.

Als weitere Farbmittel seinen Pearlescent Pigments, Mica Iron Metal Luster Pigments, Polyesterglitter Pigments und Luminescent Pigments angegeben.

Hierbei kann festgestellt werden, dass unterschiedlich eingefärbte Modelliermassen zudem beliebig miteinander vermengt, vermischt oder verknetet werden können, wodurch ein Marmorierungseffekt erzielt wird.

Die Erfindung soll anhand eines Rahmenbeispiels sowie einigen Rezepturbeispielen näher dargestellt werden.

### Rahmenbeispiel

45 - 65 Gew. % PVC oder PVC-Coplolymerisat
24 - 38 Gew. % Weichmacher
   2 - 10 Gew. % Kunststofffasern
   5 - 20 Gew. % Füllstoffe
   0 - 5 Gew. % Farbmittel
      0 - 5 Gew. % sonstige Zusätze

Stabilisatoren und Co-Stabilisatoren sind Beispiele für ggf. sonstige Zusätze.

### Rezepturbeispiel 1 - braune Modelliermasse (phthalatfrei)

57 Gew. % E-PVC oder S-PVC
29 Gew. % Weichmacher auf Citratbasis
4 Gew. % Polyethylen-Fasern
4 Gew. % Zn-Stearat
2 Gew.% Kieselsäure
3 Gew.% Kreide
1 Gew.% Farbmittel (Braunmischung)

Die Braunmischung setzt sich hierbei wie folgt zusammen
0,25 Gew. % Pigment White 6
0,4 Gew. % Pigment Red 254
0,15 Gew. % Pigment Black 7
0,2 Gew. % Pigment Yellow 83

### Rezepturbeispiel 2 - rote Masse (phthalathaltig)

51 Gew. % E-PVC oder S-PVC
25 Gew. % Dieethylhexylphthalat
5 Gew. % Polypropylen-Fasern
16 Gew. % Aluminiumsilikat
2 Gew. % Stearate
1 Gew. % Pigment Red 254

### Rezepturbeispiel 3 - gelbe Masse (phthalatfrei)

59 Gew. % E-PVC oder S-PVC
30 Gew. % Weichmacher auf Citratbasis
4,5 Gew. % Polyester-Fasern
2,5 Gew. % Stearate
3,5 Gew. % Füllstoff (Kreide, Kieselsäure)
0,5 Gew. % Pigment Yellow 83

Eine gewünschte Konsistenz der Masse kann problemlos durch die Variation von Bindemittelgehalt und/oder Weichmachergehalt eingestellt werden.

Sollte bei der Verarbeitung der erfindungsgemäßen Masse durch hohen Druck oder bei Verwendung eines Ausrollers die Oberflächen der hergestellten Gegenstände glatt ausgebildet sein, so kann durch kleine Bewegungen/Verformungen oberflächennaher Schichten/Bereiche oder leichtes Ziehen die lederartige Struktur an der Oberfläche wieder ausgebildet werden.

Die Härtetemperatur derartiger Massen beträgt 110 bis 130°C, bevorzugt 130°C, bei einer Aushärtezeit von bis zu 30 Minuten.

Die **Herstellung** der erfindungsgemäßen Masse erfolgt prinzipiell wie in der DE 25 15 757 C3 beschrieben, wonach das trockene PVC-Pulver mit dem Füllstoff gemischt und danach der Weichmacher und Co-Stabilisator zugegeben wird. Die so hergestellte Masse wird gegebenenfalls unter Kühlhaltung durch Kneten fertig gestellt.

**Verwendung** findet die erfindungsgemäße Masse bei der Herstellung von plastischen, von Hand verformbaren und durch Erhitzen härtbaren Massen, als Modelliermassen.

Die erfindungsgemäße Modelliermasse eignet sich besonders zur Herstellung von Produkten, welche in haptischer und optischer Ausprägung Leder sehr ähnlich sind, wobei die lederähnlichen Produkte eine strukturierte Oberfläche aufweisen. Derartige Produkte sind in dünnen Schichten - wie für Lederwaren üblich - durch Ausformung über Ausrollen, beispielsweise mit dem Nudelholz oder Teigroller herstellbar.

Durch den Füllstoff - vernetzte Fasern aus Kunststoff - bildet sich automatisch eine Struktur an der Oberfläche aus, die der Struktur von Leder optisch und haptisch sehr nahe kommt.

Die Schichtdicke der Modelliermasse entspricht hierbei der ungefähren Dicke von Leder. Lederdicken liegen größtenteils im Bereich von 0,8 mm bis 2,4 mm. Aufgrund der vorgegebenen Aushärtezeit und Aushärtetemperatur der erfindungsgemäßen Masse zeigt sich, dass die dünnen lederähnlichen Schichten in der ausgehärteten Form im Hinblick auf Flexibilität und Biegsamkeit lederähnlichen Charakter aufweisen.

Zur Bestimmung der Elastizität der gehärteten Masse wurde ein "Textur Analyser" herangezogen.

Mit dem "Textur Analyser" konnte bei einer runden Bruchstange mit Radius 5mm, die bei 130°C 30 min gehärtet wurde, bei einer Maximalkraft von 91 N eine maximale Auslenkung von 15,8 mm gemessen/bestimmt werden.

Es hat sich in Überraschender Weise gezeigt, dass sich die erfindungsgemäße Modelliermasse in gehärtetem Zustand durch eine hohe Flexibilität, gute Schneidbarkeit und in dünnen Schichten und in Streifenform eine gute Flechtbarkeit auszeichnet.

Die Erfindung betrifft des Weiteren Gegenstände und Objekte, hergestellt aus einer Modelliermasse nach Anspruch 1, wobei die Masse nach der Formgebung zur Gestaltung der Gegenstände und Objekte durch Wärmeeinwirkung ausgehärtet wurde, eine strukturierte, haptisch und optisch lederähnliche Oberfläche aufweist.

Die hergestellten Gegenstände - sind dabei vor und nach der Härtung, wie von Leder bekannt, biegbar und geschmeidig. Nach der Härtung sind die Gegenstände, auch in Form von dünnen Schichten gegen Zugkräfte stabil.

## Patentansprüche

1. **Modelliermasse,** mindestens bestehend aus Bindemittel, welches als Plastisol vorliegt und mindestens einem Füllstoff, sowie ggf. weiteren Zusatzstoffen, wobei sich das Plastisol im Wesentlichen aus PVC und Weichmacher zusammensetzt,
**dadurch gekennzeichnet,**
**dass** der mindestens eine Füllstoff in Form von Kunststofffasern vorliegt **und dass** die Kunststofffasern eine Länge von 0,20 bis 1,05 mm aufweisen.

2. **Masse** nach Anspruch 1,
**dadurch gekennzeichnet,**
**dass** die Masse 2 - 10 Gew. %, bevorzugt 3 - 8 % Kunststofffasern aufweist.

3. **Masse** nach Anspruch 1 oder 2,
**dadurch gekennzeichnet,**
**dass** die Kunststofffasern eine Länge 0,35 bis 0,95 mm aufweisen.

4. **Masse** nach Anspruch 1, 2 oder 3,
**dadurch gekennzeichnet,**
**dass** die Kunststoffasern verzweigt ausgebildet sind.

5. **Masse** nach mindestens einem der vorstehenden Ansprüche,
**dadurch gekennzeichnet,**
**dass** die Kunststofffasern als Polyolefinfasern und/oder Polyesterfaser ausgebildet sind.

6. **Masse** nach mindestens einem der vorstehenden Ansprüche,
**dadurch gekennzeichnet,**
**dass** die Polyolefinfasern als Polypropylenfasern oder Polyethylenfasern sowie als Mischungen dieser Fasern vorliegen.

7. **Masse** nach mindestens einem der vorhergehenden Ansprüche,
**dadurch gekennzeichnet, dass** sich die Masse aus
45 - 65 Gew. % PVC oder PVC-Coplolymerisat,
24 - 38 Gew. % Weichmacher,
2 - 10 Gew. % Kunststofffasern,
5 - 20 Gew. % Füllstoffe,
0 - 5 Gew. % Farbmittel und
0 - 5 Gew. % sonstige Zusätze
zusammensetzt.

8. **Masse** nach Anspruch 1 oder 7,
**dadurch gekennzeichnet,**
**dass** die Masse phthalathaltige und/oder phthalatfreie Weichmacher aufweist.

9. **Verwendung** einer Modelliermasse nach mindestens einem der vorhergehenden Ansprüche,
zur Erzeugung/Herstellung von Produkten, welche in haptischer und optischer Ausprägung Leder sehr ähnlich sind, wobei die lederähnlichen Produkte eine strukturierte Oberfläche aufweisen.

10. **Gegenstände und Objekte,** hergestellt aus einer Modelliermasse nach Anspruch 1, wobei die Masse nach der Formgebung zur Gestaltung der Gegenstände und Objekte durch Wärmeeinwirkung ausgehärtet wurde, eine strukturierte, haptisch und optisch lederähnliche Oberfläche aufweisen.

## Claims

1. Modelling material consisting of at least binder, which is present as plastisol, and at least one filler as well as optionally further additives, wherein the plastisol is composed substantially of PVC and softener,
**characterised in that**
the at least one filler is present in the form of plastics material fibres and
the plastics material fibres have a length of 0.20 to 1.05 millimetres.

2. Material according to claim 1,
**characterised in that**
the material comprises 2 to 10 weight %, preferably 3 to 8 %, of plastics material fibres.

3. Material according to claim 1 or 2,
**characterised in that**
the plastics material fibres have a length of 0.35 to 0.95 millimetres.

4. Material according to claim 1, 2 or 3,
**characterised in that**
the plastics material fibres are formed to be branched.

5. Material according to at least one of the preceding claims,
**characterised in that**
the plastics material fibres are formed as polyolefin fibres and/or polyester fibres.

6. Material according to at least one of the preceding claims,
**characterised in that**
the polyolefin fibres are present as polypropylene fibres or polyethylene fibres as well as mixtures of these fibres.

7. Material according to at least one of the preceding claims,
**characterised in that** the material is composed of
45 - 65 weight % PVC or PVC copolymer,
24 - 38 weight % softener,
2 - 10 weight % plastics material fibres,
5 - 20 weight % fillers,
0 - 5 weight % colorant and
0 - 5 weight % other additives.

8. Material according to claim 1 or 7,
**characterised in that**
the material comprises softener containing phthalate and/or free of phthalate.

9. Use of a modelling material according to at least one of the preceding claims for creation/production of products which are very similar in touch and visual impression to leather, wherein the products similar to leather have a structured surface.

10. Articles and objects produced from a modelling material according to claim 1, wherein the material after shaping to form the articles and objects was hardened by the action of heat, the articles and objects having a structured surface similar in touch and visually to leather.

## Revendications

1. Masse de modelage constituée d'au moins un liant se présentant comme un plastisol et d'au moins une substance de charge, ainsi que d'autres adjuvants le cas échéant, ledit plastisol étant pour l'essentiel composé de PVC et de plastifiants,
**caractérisée par le fait**
**que** la substance de charge, à présence minimale, revêt la forme de fibres de matière plastique et par le fait que lesdites fibres de matière plastique présentent une longueur de 0,20 à 1,05 mm.

2. Masse selon la revendication 1,
**caractérisée par le fait**
**que** ladite masse comprend de 2 à 10 % en poids, préférentiellement de 3 à 8 % en poids de fibres de matière plastique.

3. Masse selon la revendication 1 ou 2,
**caractérisée par le fait**
**que** les fibres de matière plastique présentent une longueur de 0,35 à 0,95 mm.

4. Masse selon la revendication 1, 2 ou 3,
**caractérisée par le fait**
**que** les fibres de matière plastique sont de conception ramifiée.

5. Masse selon au moins l'une des revendications précédentes,
**caractérisée par le fait**
**que** les fibres de matière plastique sont réalisées en tant que fibres de polyoléfine et/ou en tant que fibres de polyester.

6. Masse selon au moins l'une des revendications précédentes,
**caractérisée par le fait**
**que** les fibres de polyoléfine se présentent comme des fibres de polypropylène ou des fibres de polyéthylène, ainsi que comme des mélanges de ces fibres.

7. Masse selon au moins l'une des revendications précédentes,
**caractérisée par le fait que** ladite masse se compose de
45 à 65 % en poids de PVC ou de copolymère de PVC,
24 à 38 % en poids de plastifiants,
2 à 10 % en poids de fibres de matière plastique,
5 à 20 % en poids de substances de charge,
0 à 5 % en poids de colorants et
0 à 5 % en poids d'autres adjuvants.

8. Masse selon la revendication 1 ou 7,
**caractérisée par le fait**
**que** ladite masse comporte des plastifiants renfermant du phtalate et/ou exempts de phtalate.

9. Utilisation d'une masse de modelage conforme à au moins l'une des revendications précédentes,
dévolue à la création/fabrication de produits dont les caractères haptique et optique sont très similairement imprégnés de ceux du cuir, les produits semblables à du cuir possédant une surface structurée.

10. Articles et objets fabriqués à partir d'une masse de modelage conforme à la revendication 1, ladite masse ayant été durcie sous l'action de la chaleur à l'issue du façonnage
ciblant la configuration desdits articles et objets, lesquels possèdent une surface structurée, haptiquement et visuellement semblable à celle du cuir.
